# EUROPEAN PATENT APPLICATION

(11) **EP 1 185 052 A2**
(43) Date of publication of application: **06.03.2002**
(21) Application number: 01200099.8
(22) Date of filing: 11.01.2001
(51) Int. Cl.: H04L 29/06

(54) **Carrier-free terminal authenication system by means of a mail-back method**

(30) Priority: 08.05.2000 JP 2000134500; 19.06.2000 JP 2000183088; 20.09.2000 JP 2000285828
(71) Applicant: IDS Corporation, Tokyo 105-0014 (JP)
(72) Inventor: Kumagai, Takuya, c/o IDS Corporation, Tokyo 105-0014 (JP); Maeda, Mariko, c/o IDS Corporation, Tokyo 105-0014 (JP); Nakano, Takashi, c/o IDS Corporation, Tokyo 105-0014 (JP)
(74) Representative: Hooiveld, Arjen Jan Winfried

(57) **Abstract**

The present invention provides Internet contents providers with a carrier-free authentication method for mobile terminals that use the contents of an unofficial website. The parameter attached to the URL differs each time or within a specific period of time, and moreover, differs from user to user. Therefore, by using this method, even if all the information - URL, user ID and password - should leak out to a third-party user who poses as a legitimate user, a new parameter would be sent to the fraudulent user. The moment the new parameter is sent, the former parameter becomes invalidated. The legitimate user does not know the new parameter that is now in the hands the fraudulent user. Therefore, the URL that the legitimate user accesses will contain the former parameter. When this kind of access occurs, it would be judged as a double log-in, and access by both the fraudulent and legitimate user becomes invalidated.

## Description

### BACKGROUND OF THE INVENTION

### 1. Field of the Invention

The present invention relates to a carrier-free terminal authentication system by means of a mail-back method that does not make use of terminal-specific information in order to limit the terminals making access to an Internet server and enables web contents providers to conduct terminal authentication as well as maintain security without making use of the authentication data provided by a carrier.

### 2. Description of the Prior Art

To deal with general security issues, such methods as the use of user ID and passwords (PW), and moreover, the creation of a website exclusive to the user have been devised as mechanisms for controlling terminal-specific data for terminal authentication purposes. The lowest security-level means for user identification has traditionally been the creation of a webpage that is exclusive to the user and the recognition of only those who access this page as a legitimate user (method A). This is a convenient method as a user can always access his exclusive webpage in a single step by simply adding the URL (Uniform Resource Locator) for the exclusive webpage to his bookmark. However, security is easily compromised if a third party monitors the transmission.

The next method is to create a webpage that is exclusive to a user, and protect it by use of a user ID and password (method B). However, this method is not secure since the legitimate user could possibly, with ill intent, disclose all the necessary information - the URL, user ID and password - to a third party.

A highly secure method is one in which the user inputs his user ID and password to a user-exclusive website and requests a mail-back from the server, and the server returns an E-mail message to the user embedded with a URL with an allotted parameter that differs each time (method C). In this method, the E-mail is sent only to legitimately contracted terminals, so even if a request is made from any other terminal, the E-mail message will not be returned to those other terminals, and therefore only legitimately contracted terminals are able to proceed to the next step.

Providers that supply applications on the Internet seek to authenticate the terminals that make use of their contents and bill the terminal for the use. However, in regards to specific carriers, for example, in the case of the i-mode service, it is not possible to make use of terminal-specific information when the mobile terminal is using a website that is not positioned as an official NTT DoCoMo(Japanese company) website. This created the problem that application contents that were not positioned as a NTT DoCoMo official website were unable to make terminal authentication using NTT DoCoMo's information and were therefore unable to process billing for their use. Moreover, because the authentication data was transmitted from the mobile terminals of multiple carriers such as NTT DoCoMo, KDDI(Japanese company), J-Phone(Japanese company), etc., it was necessary for the authentication server to exchange authentication data with each particular carrier. This made authentication difficult, especially in cases when the services were to be provided over a wide area and across national borders.

In regards to authentication security, our objective is to provide an authentication system that will maintain security in all of the four cases below as well as provide a system whereby one can configure the level of authentication depending on security needs.

Case 1: in which user IDs and passwords are used to grant permission to view a shared webpage, and there is a leak of the user ID and password. This is a common security issue since a market for the transaction of user IDs and passwords already exists on the Internet.

Case 2: in which an exclusive webpage with a user-exclusive URL is created to prevent log-ins by third parties, and there is a leak of the URL itself. Because, generally speaking, URLs pass between servers as is without being encrypted, etc., it is easy for a third party to intercept a user-exclusive URL by simply monitoring the state of transmission.

Case 3: in which an exclusive webpage is created as in Case 2 and is further protected by user IDs and passwords, but there is a leak of the URL, user ID and password. This breach of security occurs, for example, in cases where legitimate users with ill intent disclose all the information (URL, user ID and password) in order to share a service with friends.

### SUMMARY OF THE INVENTION

Therefore, the objective of the present invention is to supply Internet contents providers with an authentication method, which is not dependent on a website's attributes - in other words, one that is carrier-free - and at the same time, provide system security. Furthermore, taking into consideration the differences in security needs, the objective of this invention is also to provide a carrier-free authentication system by means of a mail-back method in which one can configure different level authentication methods.

The issues related to the configuration of an authentication method are as follows:

To construct a system that allows configuration whereby it is possible to continue providing information depending on the type of log-in error, such as providing information one additional time if a legitimate user experiences a time-out error.

In the carrier-free authentication system by means of a mail-back method, parameters are fundamentally for one-time use only, and inconveniences arise if the browser's "back" button is used; that is, it becomes impossible to go "back". Therefore, in consideration of the users' convenience, a function which makes it possible to configure the use of the browser's "back" button - between a state where it is not possible to go "back" to a state where multiple use is possible - will be provided.

In the carrier-free authentication system by means of a mail-back method, the user must input his ID and password on his mobile terminal keyboard every time he logs in. However, the input of an ID and password from a mobile terminal can be troublesome. Therefore, a mechanism whereby a user can receive an E-mail notification of a URL embedded with a parameter by simply accessing an exclusive page that has been bookmarked will be provided. However, the carrier-free authentication system by means of a mail-back method provided will be secure even in the case that the bookmarked URL leaks out and a third-party accesses the exclusive.

The present invention is related to a carrier-free terminal authentication system by means of a mail-back method. The above listed objectives of the present invention are achieved by changing the parameter attached to the URL for each use or within a specified period of time as well as by making the parameter differ for each user. Furthermore, should there be a leak of all the information - the URL, user ID and password - the objectives shall be achieved by providing a system that can be configured to allows such information to be used only once or only within a specified period of time.

Even in the case that there should be a leak of all the information - URL, user ID and password - while using this method and a third-party poses as a legitimate user, this invention's authentication system would compare the parameter of the fraudulent user and legitimate user and detect any fraudulent access.

Claim 1 describes the mechanism of this authentication process. The middleware procures the username and password from the mobile terminal, checks that information against pre-registered information, and in the case that it authorizes the user as being legitimate, it creates an exclusive webpage.

The address for the exclusive webpage contains information regarding the URL, username and sequence number. At the same time that the middleware creates the aforementioned exclusive webpage, it also boots the mail server and sends an E-mail message to the pre-registered mail address of the user in question. The E-mail contains the URL of the above-mentioned exclusive webpage. The user receives the E-mail, opens the E-mail message and clicks on the URL of the above-mentioned exclusive webpage.

Claim 2 describes the changes in the parameter. By clicking on the URL, the terminal's web browser starts up and accesses the middleware. When the terminal accesses the middleware, the middleware makes a decision regarding the username and sequence number within the address to allow access to the web server. The middleware receives the webpage for which access has been granted and embeds the next sequence number. Once used, the sequence number thereafter becomes invalid. The sequence number shall not be easy to analogically infer and shall be random numbers that combine numerals and the alphabet such as 2A13.

As such, in the case that a fraudulent user makes fraudulent access, the authentication system of this invention shall judge this to be a double log-in, and it will become possible to invalidate access by both the legitimate and fraudulent user.

In the case that access by the legitimate user becomes invalidated, the legitimate user would once again request a mail-back and receive a new parameter. Because the fraudulent user cannot receive this mail-back message, only the legitimate user would be able to access the service thereafter.

In Claim 3, a status code is transmitted from the middleware to the application installed in the web server in order to authenticate the access as being from a legitimate or not. This status code shall consist of a two-value parameter: 0 and 1. 0 shall refer to a legitimate access and 1 shall refer to an access error. In the case of such error, a detailed status code shall be further transmitted to the application. The parameter of this detailed status code shall be numbers allotted to error types, and these numeric values shall become the value of the parameter. Therefore, it becomes possible for the application administrator to configure the application to make a judgement as to whether information contained in the application is to be provided or not depending on the type of error.

A mechanism that allows one to freely configure the number of times - from 0 to N times before - that the past sequence numbers stored in the web browser's cache memory along with information regarding past webpages displayed will be valid will be included in Claim 4. However, in order to tighten security, it will not be possible to use the "back" button if it is configured for 0 times.

Claim 5 provides a mechanism whereby a user simply accesses a bookmarked exclusive webpage in order to receive an E-mail message containing a parameter-embedded URL. Even if a third-party were to access that exclusive webpage, the E-mail notice with the URL containing the user ID and sequence number would be transmitted only to the pre-registered E-mail address of the legitimate user, so the parameter-embedded URL would only be transmitted to the legitimate user. Therefore, security is maintained even in this instance. However, under this mechanism, security is not maintained in the case that the terminal itself falls into the hands of a third party, and so this bookmark mechanism is a tradeoff between security and ease of use.

As can be seen from the explanation above, Claim 3 and Claim 4 refer to methods that allow individual users to choose and configure the security level depending on their needs.

### BRIEF DESCRIPTION OF THE DRAWINGS

In the accompanying drawings:
FIG. 1 is a block diagram that illustrates the details of the website; and
FIG. 2 is a flowchart of the authentication process.

### DESCRIPTION OF THE PREFERRED EMBODIMENTS

The present invention resolves traditional issues by using a middleware named MCFSS (Mobile Carrier Free Security System) instead of terminal-specific information such as the serial numbers of mobile terminals such as mobile telephones.

The details of the preferred embodiments of the present invention are provided below with an explanation based on drawings.

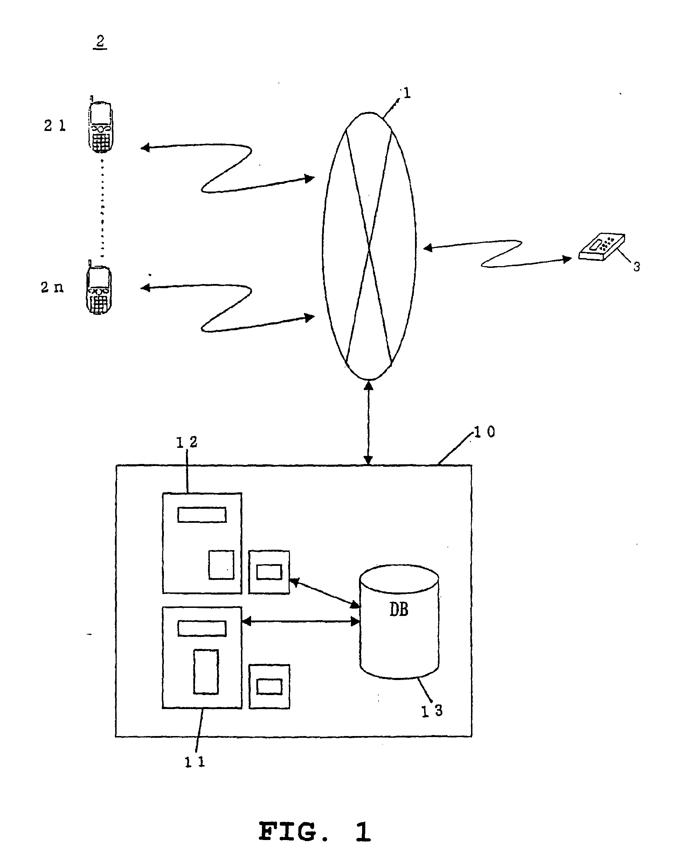

FIG.1 is an illustration of the basic concept of the present invention. Mobile telephones with i-mode capability and mobile telephones of other carriers with Internet connectivity = 2 (21 - 2n) and other mobile terminals = 3 are connected to the Internet = 1, and furthermore, a website = 10 is connected to the Internet = 1. The mobile terminals 2 and 3 each possess individually granted E-mail addresses, and website = 10 is furnished with a web server = 11 with authentication middleware and a mail server=12, and the web server = 11 and mail server = 12 possess various databases = 13.

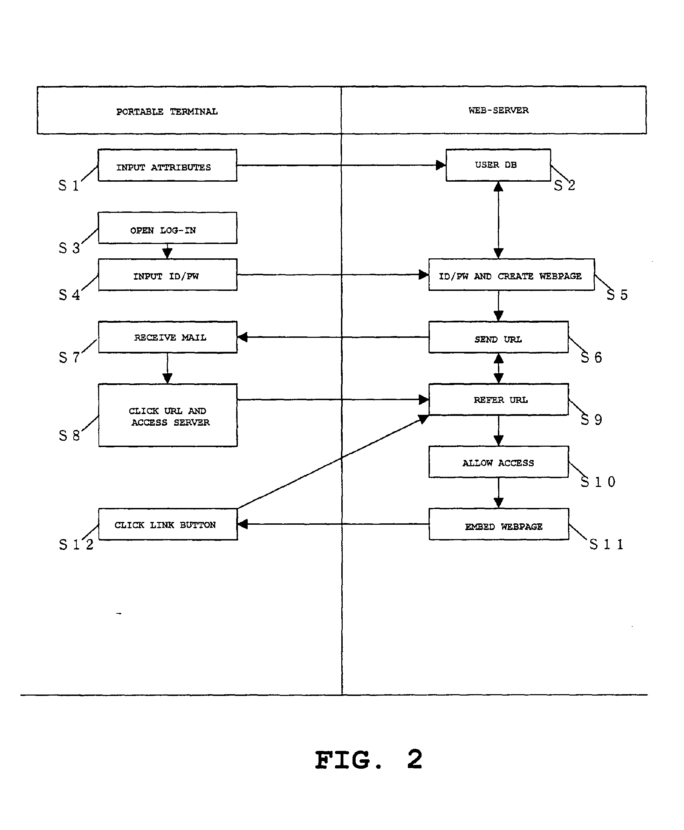

With the system composed as such, the authentication process proceeds as shown in the flowchart found in FIG.2. First, the user of the site service (user) opens up the registration window using the mobile terminal = 2, and inputs attributes such as name, ID/password and the terminal's E-mail address(Step S1). The inputted data is registered in the website's user DB (database) via the server(Step S2).

Next, the user uses his mobile terminal's web browser to open the log-in window(Step S3), and inputs his user ID/password(Step S4). The server then checks the user ID/password, and in the case that it is a legitimate user, creates an exclusive webpage(Step S5) and sends the URL for the exclusive webpage to the user's registered E-mail address(Step S6). The user receives this E-mail on his mobile terminal (Step S7), and opens the E-mail message and clicks on the URL thereby starting up the web browser, initiating access to the server(Step S8). The server judges the legitimacy of the URL(Step S9), and if it authenticates the user making the access as legitimate, it allows access to the directory (Step S10) while at the same time embedding the next sequence number to the webpage to which access was granted(Step S11). The user clicks on the link button containing the sequence number embedded URL(Step S12). Thereafter, it returns to Step S9 to check whether the URL of any new access is correct or not.

Here is one example of the format of the URL: http://www.ids.co.jp/members?UN = kuma&SN = 2A13. "UN" refers to the username and "SN" refers to the sequence number. The sequence number changes for each access and is created automatically by the server. The username stays consistent for each user.

The status code and detailed status code, which are transmitted from the middleware to the application installed in the web server, are explained next.

An example of the possible information transmitted from the middleware to the application is as follows: http://www.my89.com/members?ID = kuma&SC = 1&DT = 100. Here, "http://www.my89.com/members" is the URL that the user is trying to access. "ID=kuma" is the user's own ID. "SC=1" is a parameter called the "status code", and "1" denotes an error while "0" denotes legitimate access. "DT = 100" is a parameter called the "detailed status code" , and possible are as follows:
DT = 100 denotes a wrong sequence number
DT = 101 denotes access from an unregistered ID
DT = 102 denotes double log-in by the same user
DT = 103 denotes three consecutive log-in failures
DT = 104 denotes time-out

The application receives such status codes or detailed status codes, and it becomes possible to make a judgement on whether information is to be provided or not based on the error type. For example, it can allow the provision of information one additional time if there is a time-out error.

Because the present invention is as described above, it will effectuate the following. It shall enable authentication of mobile terminals and such regardless of whether a content is part of a specific telecommunications company's official website or not. In other words, it will enable authentication that is carrier free.

Additionally, in this method, it is not possible to request mail-back without the input of a user ID and password. Therefore, depending on the user's system configuration, it becomes impossible for a third party, who has come into possession of a terminal, to pose as a legitimate user and move on to the next step through simple possession of a terminal. In other words, it becomes possible to configure different levels of security depending on the security level requested by the user. Moreover, it is possible for the web application administrator to configure the system to allow users the use of the application in cases of specified user access-errors.

## Claims

1. A carrier-free terminal authentication system by means of a mail-back method, comprised of terminals as well as mobile terminals, a web server installed with various applications, a user management database, and a server middleware that controls sessions between the aforementioned terminals as well as mobile terminals and the aforementioned web server, the characteristics of the system being that based on data derived from the aforementioned user management database, the system assigns a parameter to the URL being transmitted to the aforementioned terminal or mobile terminal, and the aforementioned parameter is configured to differ for each user or for each access to the web server, and in the case that the aforementioned middleware authenticates access by a user as legitimate, it creates a webpage exclusive to the user and at the same time boots the mail server and returns an E-mail message to the user containing the URL for the webpage exclusive to the aforementioned user.

2. The carrier-free authentication system by means of a mail-back method according to Claim 1, wherein its characteristic is that the aforementioned parameter can be made to change after a specified period, and in the case that the aforementioned parameter differs for each access to the aforementioned middleware, the parameter can be invalidated after one use, or in the case that the parameter is made to change after a specific period of time, it can be invalidated after the lapse of the specified time period.

3. The carrier-free authentication system by means of a mail-back method according to Claim 1, wherein its characteristic is that the middleware authenticates the legitimacy of an access when a user is making access to the aforementioned application installed in the aforementioned web server, and in the case that there is an access error, transmits a message to the application denoting the type of error, and in the case of specified access errors, allows the user to make use of the application.

4. The carrier-free authentication system by means of a mail-back method according to Claim 1, wherein its characteristic is that it is possible to freely configure the aforementioned URL parameter's use-history from an environment that does not allow use of the 'back' button on the user' s browser to one that allows multiple uses.

5. The carrier-free authentication system by means of a mail-back method according to Claim 1, wherein its characteristic is that the aforementioned middleware creates a page exclusive to a user, and it is possible for the user to receive by E-mail the aforementioned URL embedded with a parameter by simply accessing the bookmarked aforementioned page.
